# EUROPEAN PATENT APPLICATION

(11) **EP 4 803 366 A1**
(43) Date of publication of application: **09.09.2026**
(21) Application number: 26162617.0
(22) Date of filing: 05.03.2026
(51) Int. Cl.: B60N 2/75

(54) **A SYNCHRONOUS TELESCOPIC CONTROL MECHANISM FOR ARMRESTS ON BOTH SIDES AND A BACKREST**

(30) Priority: 05.03.2025 CN 202520385340 U
(71) Applicant: Adient (Chongqing) Automotive Components Co., Ltd., Liangjiang New Area, Chongqing 401122 (CN)
(72) Inventor: ZHANG, Zhishen, Chongqing, Liangjiang New Area 401122 (CN); LIN, Bijun, Chongqing, Liangjiang New Area 401122 (CN); DENG, Xinyuan, Chongqing, Liangjiang New Area 401122 (CN); TAN, Muxing, Chongqing, Liangjiang New Area 401122 (CN); LI, Yajun, Chongqing, Liangjiang New Area 401122 (CN); JIA, Wei, Chongqing, Liangjiang New Area 401122 (CN); LI, Qingmao, Chongqing, Liangjiang New Area 401122 (CN); XIN, Yi, Chongqing, Liangjiang New Area 401122 (CN); FAN, Jiang, Chongqing, Liangjiang New Area 401122 (CN)
(74) Representative: Liedtke & Partner Patentanwälte

(57) **Abstract**

The present invention discloses a synchronous telescopic control mechanism for armrests on both sides which comprises a backrest (8), wherein a base (A) is fixedly mounted in the backrest (B), a first threaded rod (3) and a second threaded rod (4) extending along a width direction of the backrest (B) are respectively rotatably mounted at two ends of the base (A), a first threaded fitting (5) in threaded fit with the first threaded rod (3) is sleeved on the first threaded rod (3), a second threaded fitting (6) in threaded fit with the second threaded rod (4) is sleeved on the second threaded rod (4), and thread directions of the first threaded fitting (5) and the second threaded fitting (6) are opposite to each other; The first threaded fitting (5) is connected with a left armrest (8), the second threaded fitting (6) is connected with a right armrest (9), the first threaded fitting (5) and the second threaded fitting (6) are both slidably mounted along the width direction of the backrest (B), a motor is provided on the base (A), which is used to drive the first threaded rod (3) and the second threaded rod (4) to synchronously rotate, and under a transmission action of threads, the first threaded fitting (5) and the second threaded fitting (6) can be forced to move in opposite directions. The beneficial effects of the present invention are: single-motor driving is adopted, the size is small, and synchronization is good.

## Description

### Technical field

The present invention relates to the technical field of automobile seat armrest parts, and in particular to a synchronous telescopic control mechanism for armrests on both sides of a backrest and the backrest itself.

### Background technology

With the improvement of people's standards of living, consumers' requirements for the quality of automobile interiors and the comfort of riding are getting higher and higher, and in order to meet consumers' diversified needs, more and more vehicle models are being equipped with seat armrests to improve riding comfort. Traditional automobile seat armrests are mainly in two forms, and one form is that it is erected on a side portion of a seat backrest and can be manually unfolded and turned forward, and the other form is that it is fixed on two sides of the seat. These two traditional forms have single functions, are not convenient to use, and take up space in the vehicle when not in use.

In order to meet the increasingly changeable in-vehicle application environment at present, hidden seat armrests have appeared on the market, that is, the armrest can be stored on two sides of the seat and unfolded when in use, reducing the space taken up by two sides of the seat when not in use. Existing armrest control mechanisms are all arranged inside a seat backrest, and movement control of armrests mainly adopts two methods. One method is to use two sets of control mechanisms to respectively control armrests on two sides of a seat, such a control manner takes up a large space and will have a large impact on the arrangement of other modules inside the backrest, and there is little separate use of armrests on both sides. The other method is single-motor driving, synchronously controlling armrests on both sides through, e.g., gear transmission, but at present most synchronously controlled armrests have a problem of poor synchronization, and inconsistent opening speeds of armrests on both sides will affect comfort of use.

### Summary of the invention

In view of this, the present invention provides a synchronous telescopic control mechanism for armrests on both sides, which has advantages of good synchronization and small size.

In order to achieve the above aim, the technical solution of the present invention is as follows:
A synchronous telescopic control mechanism for armrests on both sides of a backrest comprises a base which is fixedly mounted in the backrest; a first threaded rod and a second threaded rod are respectively rotatably mounted at two ends of the base, the first threaded rod and the second threaded rod both extend along a width direction, in particular of the backrest, a first threaded fitting in threaded fit with the first threaded rod is sleeved on the first threaded rod, a second threaded fitting in threaded fit with the second threaded rod is sleeved on the second threaded rod, and thread directions of the first threaded fitting and the second threaded fitting are opposite to each other; the first threaded fitting is connected with a left armrest, the second threaded fitting is connected with a right armrest, the first threaded fitting and the second threaded fitting are both slidably mounted along the width direction of the backrest, and a motor is provided on the base, which is used to drive the first threaded rod and the second threaded rod to synchronously rotate; the first threaded rod and the second threaded rod rotate, and under a transmission action of threads, can force the first threaded fitting and the second threaded fitting to move in opposite directions.

Further, a backrest with the synchronous telescopic control mechanism for armrests on both sides of the backrest is provided wherein the control mechanism comprises a base is fixedly mounted in the backrest; a first threaded rod and a second threaded rod are respectively rotatably mounted at two ends of the base, the first threaded rod and the second threaded rod both extend along a width direction of the backrest, a first threaded fitting in threaded fit with the first threaded rod is sleeved on the first threaded rod, a second threaded fitting in threaded fit with the second threaded rod is sleeved on the second threaded rod, and thread directions of the first threaded fitting and the second threaded fitting are opposite to each other;
the first threaded fitting is connected with a left armrest, the second threaded fitting is connected with a right armrest, the first threaded fitting and the second threaded fitting are both slidably mounted along the width direction of the backrest, a motor is provided on the base, which is used to drive the first threaded rod and the second threaded rod to synchronously rotate; the first threaded rod and the second threaded rod rotate, and under a transmission action of threads, can force the first threaded fitting and the second threaded fitting to move in opposite directions.

By adopting the above structure, one motor is used for driving, armrests on both sides are controlled through a lead screw transmission principle, thread fit rotation directions of armrests on both sides are opposite to each other, synchronous extension and retraction of the two armrests can be realized, adjustment is convenient, synchronization is good, and the structure is simple and compact, the size is small, and arrangement of other modules inside the backrest is not affected.

Preferably: a limiting component is further provided on the base, and the limiting component is used to enable the first threaded fitting and the second threaded fitting to slide along a width direction of the backrest. By adopting the above structure, rotation of the first threaded fitting and the second threaded fitting is limited.

Preferably: the first threaded fitting and the second threaded fitting are both provided with a guide structure protruding outward along a radial direction thereof, the limiting component comprises a guide groove formed in the base, the guide groove extends along an axial direction of the first threaded rod and the second threaded rod, and the guide structures are both slidably placed in the guide groove. By adopting the above structure, the structure is simple, and the first threaded fitting and the second threaded fitting slide along the width direction of the backrest under driving of the motor.

Preferably: the inner side of the left armrest is fixedly connected with a left connecting rod, the left connecting rod is of a hollow structure and is sleeved on the first threaded rod with a clearance, and the first threaded fitting is located inside the left connecting rod and is fixedly connected with the left connecting rod. By adopting the above structure, the structure is more stable and connection is convenient.

Preferably: the inner side of the right armrest is fixedly connected with a right connecting rod, the right connecting rod is of a hollow structure and is sleeved on the second threaded rod with a clearance, and the second threaded fitting is located inside the right connecting rod and is fixedly connected with the right connecting rod. By adopting the above structure, the structure is more stable and connection is convenient.

Preferably: side walls of the left connecting rod and the right connecting rod are both formed with mounting holes, the guide structures both pass through the mounting holes, and end portions are slidably placed in the guide groove. By adopting the above structure, the structure is compact and installation is convenient.

Preferably: the motor is connected with a synchronizing rod, and two ends of the synchronizing rod are respectively connected with the first threaded rod and the second threaded rod through couplings. By adopting the above structure, connection is simple and stable, and the synchronizing rod is driven by the motor to rotate to drive the first threaded rod and the second threaded rod to synchronously rotate.

Preferably: an extension rod is fixedly connected between the second threaded rod and the synchronizing rod. By adopting the above structure, symmetrical installation of armrests on both sides is facilitated.

Compared with the prior art, the beneficial effects of the present invention are:
1. By adopting the synchronous telescopic control mechanism for armrests on both sides of the backrest provided by the present invention, one motor is used for driving, armrests on both sides are controlled through the lead screw transmission principle, thread fit rotation directions of the armrests on both sides are opposite to each other, so that when the first threaded rod and the second threaded rod synchronously rotate, the first threaded fitting and the second threaded fitting can synchronously slide inward and outward to drive the armrests on both sides to synchronously extend and retract. In this way, an adjustment can be convenient, and synchronization is good.
2. The overall arrangement of the control mechanism is linear, the structure is simple and compact, has a small size and takes up a small space, and arrangement of other modules inside the backrest is not affected.

### Description of the accompanying drawings

- FIG. 1: is an installation schematic diagram of the present invention;
- FIG. 2: is a structural schematic diagram of the present invention;
- FIG. 3: is a schematic diagram showing the limiting component 7;
- FIG. 4: is a schematic diagram showing opposite thread directions on both sides.

### Specific embodiments

The present invention is further described below in combination with embodiments and drawings.

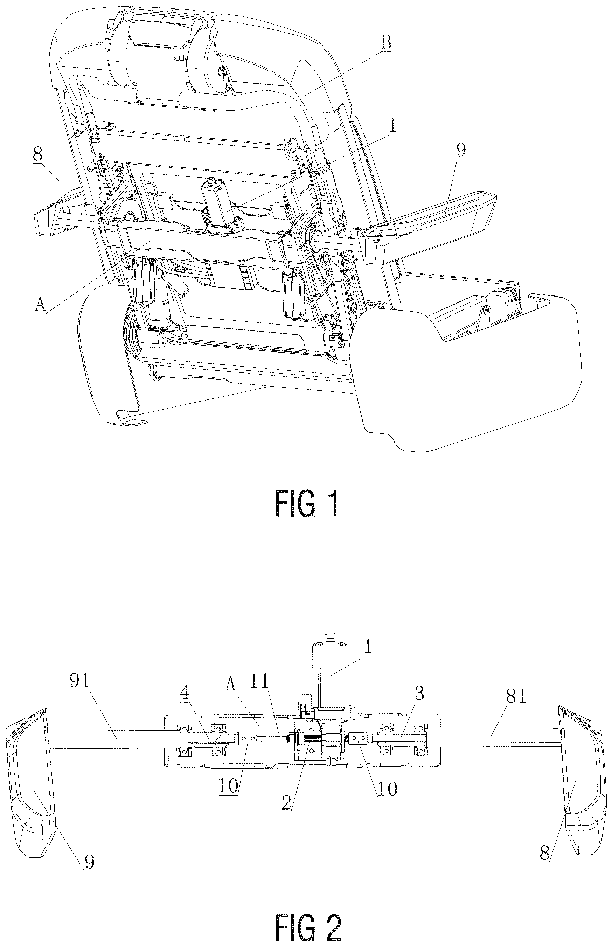

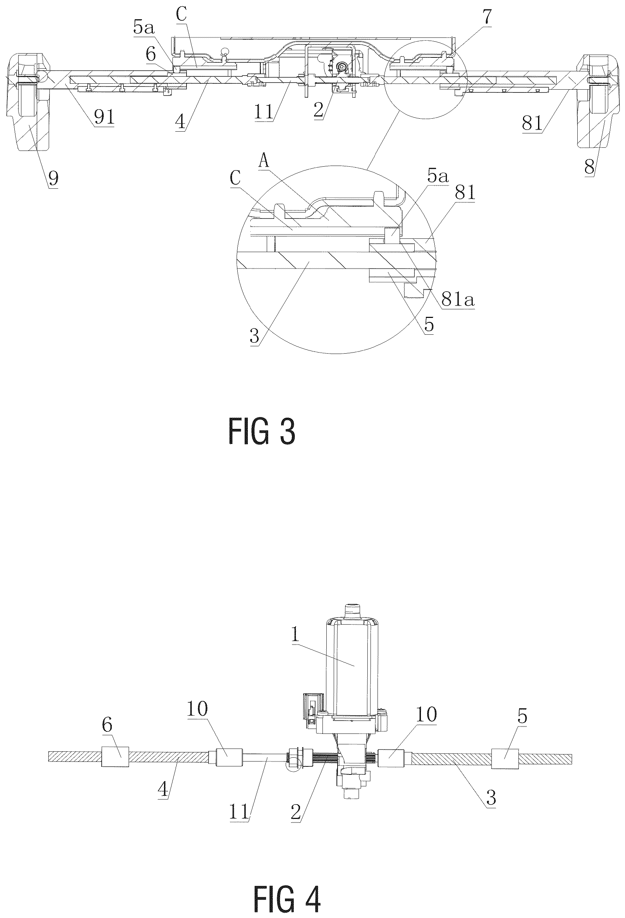

As shown in FIG. 1 and FIG. 2, a synchronous telescopic control mechanism for armrests on both sides comprises a backrest B, a base A is fixedly mounted in the backrest B, a first threaded rod 3 and a second threaded rod 4 are rotatably mounted on the base A, the first threaded rod 3 and the second threaded rod 4 both extend along a width direction of the backrest B, wherein, as shown in FIG. 3, a first threaded fitting 5 in threaded fit with the first threaded rod 3 is sleeved on the first threaded rod 3, a second threaded fitting 6 in threaded fit with the second threaded rod 4 is sleeved on the second threaded rod 4, the first threaded fitting 5 is connected with a left armrest 8, the second threaded fitting 6 is connected with a right armrest 9, and a limiting component 7 is provided on the base A and is used to enable the first threaded fitting 5 and the second threaded fitting 6 to slide along the width direction of the backrest B.

As shown in FIG. 4, a motor 1 is provided on the base A, the motor 1 is connected with a synchronizing rod 2, two ends of the synchronizing rod 2 are respectively connected with the first threaded rod 3 and the second threaded rod 4 through couplings 10, and to enable symmetrical installation of the armrests on both sides, an extension rod 11 is further fixedly connected between the second threaded rod 4 and the synchronizing rod 2. The motor 1 drives the synchronizing rod 2 to rotate, the rotation of which drives the first threaded rod 3 and the second threaded rod 4 to synchronously rotate. Thread directions of the first threaded rod 3 and the second threaded rod 4 are opposite to each other, and corresponding thread directions of the first threaded fitting 5 and the second threaded fitting 6 are also opposite to each other so that when the first threaded rod 3 and the second threaded rod 4 synchronously rotate, under the transmission action of the threads, the first threaded fitting 5 and the second threaded fitting 6 can be forced to move in opposite directions, so as to drive armrests on both sides to synchronously extend and retract.

As shown in FIG. 3, in this embodiment, the inner side of the left armrest 8 is fixedly connected with a left connecting rod 81, the inner side of the right armrest 9 is fixedly connected with a right connecting rod 91, the left connecting rod 81 and the right connecting rod 91 are both of hollow structures and are respectively sleeved on the first threaded rod 3 and the second threaded rod 4 with clearances, the first threaded fitting 5 is located inside the left connecting rod 81 and is fixedly connected with the left connecting rod 81, and the second threaded fitting 6 is located inside the right connecting rod 91 and is fixedly connected with the right connecting rod 91. The first threaded fitting 5 and the second threaded fitting 6 are both provided with a guide structure 5a protruding outward along a radial direction thereof, the limiting component 7 comprises a guide groove C formed in the base A, the guide groove C extends along an axial direction of the first threaded rod 3 and the second threaded rod 4, side walls of the left connecting rod 81 and the right connecting rod 91 are both formed with mounting holes 81a, the guide structures 5a both pass through the mounting holes 81a, and end portions are slidably placed in the guide groove C.

As shown in FIG. 3 and FIG. 4, in this embodiment, the first threaded fitting 5 and the second threaded fitting 6 are controlled by one motor 1 through the lead screw transmission principle, the first threaded fitting 5 and the second threaded fitting 6 connect the armrests on both sides via the left connecting rod 81 and the right connecting rod 91, and since the thread directions of the first threaded fitting 5 and the second threaded fitting 6 are opposite to each other, under a transmission action of the threads, the first threaded fitting 5 and the second threaded fitting 6 can be forced to move in opposite directions, so as to drive the armrests on both sides to synchronously extend and retract. In this way, an adjustment can be conveniently made, synchronization is good, and the structure is simple and compact and has a small size, and arrangement of other modules inside the backrest is not affected.

Finally, it should be noted that only preferred embodiments of the present invention are described in the above, and a person of ordinary skill in the art, under the inspiration of the present invention, can make various similar representations without violating the purpose and claims of the present patent application, and such variations all fall within the protection scope of the present patent application.

### List of References

- 1: motor
- 2: synchronizing rod
- 3: first threaded rod
- 4: second threaded rod
- 5: first threaded fitting
- 5a: guide structure
- 6: second threaded fitting
- 7: limiting component
- 8: left armrest
- 9: right armrest
- 10: couplings
- 11: extension rod
- 81: left connecting rod
- 81a: mounting holes
- 91: right connecting rod

- A: base
- B: backrest
- C: guide groove

## Claims

1. A synchronous telescopic control mechanism for armrests on both sides of a backrest (B), **characterised in that**: the control mechanism comprises a base (A), a first threaded rod (3) and a second threaded rod (4) are respectively rotatably mounted at two ends of the base (A), the first threaded rod (3) and the second threaded rod (4) both extend along a width direction, in particular of the backrest (B), a first threaded fitting (5) in threaded fit with the first threaded rod (3) is sleeved on the first threaded rod (3), a second threaded fitting (6) in threaded fit with the second threaded rod (4) is sleeved on the second threaded rod (4), and thread directions of the first threaded fitting (5) and the second threaded fitting (6) are opposite to each other;
the first threaded fitting (5) is connected with a left armrest (8), the second threaded fitting (6) is connected with a right armrest (9), the first threaded fitting (5) and the second threaded fitting (6) are both slidably mounted along the width direction of the backrest (B), a motor (1) is provided on the base (A), which is used to drive the first threaded rod (3) and the second threaded rod (4) to synchronously rotate;
the first threaded rod (3) and the second threaded rod (4) rotate, and under a transmission action of threads, can force the first threaded fitting (5) and the second threaded fitting (6) to move in opposite directions.

2. The synchronous telescopic control mechanism according to claim 1, **characterised in that**: a limiting component (7) is further provided on the base (A), and the limiting component (7) is used to enable the first threaded fitting (5) and the second threaded fitting (6) to slide along the width direction of the backrest (B).

3. The synchronous telescopic control mechanism according to claim 2, **characterised in that**: the first threaded fitting (5) and the second threaded fitting (6) are both provided with a guide structure (5a) protruding outward along a radial direction thereof, the limiting component (7) comprises a guide groove (C) formed in the base (A), the guide groove (C) extends along an axial direction of the first threaded rod (3) and the second threaded rod (4), and the guide structures (5a) are both slidably placed in the guide groove (C).

4. The synchronous telescopic control mechanism according to anyone of the preceding claims, **characterised in that**: an inner side of the left armrest (8) is fixedly connected with a left connecting rod (81), the left connecting rod (81) is of a hollow structure and is sleeved on the first threaded rod (3) with a clearance, and the first threaded fitting (5) is located inside the left connecting rod (81) and is fixedly connected with the left connecting rod (81).

5. The synchronous telescopic control mechanism according to claim 4, **characterised in that**: an inner side of the right armrest (9) is fixedly connected with a right connecting rod (91), the right connecting rod (91) is of a hollow structure and is sleeved on the second threaded rod (4) with a clearance, and the second threaded fitting (6) is located inside the right connecting rod (91) and is fixedly connected with the right connecting rod (91).

6. The synchronous telescopic control mechanism according to claim 5, **characterised in that**: side walls of the left connecting rod (81) and the right connecting rod (91) are both formed with mounting holes (81a), the guide structures (5a) both pass through the mounting holes (81a), and end portions are slidably placed in the guide groove (C).

7. The synchronous telescopic control mechanism according to anyone of the preceding claims, **characterised in that**: the motor (1) is connected with a synchronizing rod (2), and two ends of the synchronizing rod (2) are respectively connected with the first threaded rod (3) and the second threaded rod (4) through couplings (10).

8. The synchronous telescopic control mechanism according to claim 7, **characterised in that**: an extension rod (11) is fixedly connected between the second threaded rod (4) and the synchronizing rod (2).

9. A backrest (B) with a synchronous telescopic control mechanism according to anyone of the preceding claims for armrests on both sides of the backrest (B), **characterised in that**: the control mechanism comprises a base (A) which is fixedly mounted in the backrest (B), a first threaded rod (3) and a second threaded rod (4) which are respectively rotatably mounted at two ends of the base (A), the first threaded rod (3) and the second threaded rod (4) both extend along a width direction of the backrest (B), a first threaded fitting (5) in threaded fit with the first threaded rod (3) is sleeved on the first threaded rod (3), a second threaded fitting (6) in threaded fit with the second threaded rod (4) is sleeved on the second threaded rod (4), and thread directions of the first threaded fitting (5) and the second threaded fitting (6) are opposite to each other;
the first threaded fitting (5) is connected with a left armrest (8), the second threaded fitting (6) is connected with a right armrest (9), the first threaded fitting (5) and the second threaded fitting (6) are both slidably mounted along the width direction of the backrest (B), a motor (1) is provided on the base (A), which is used to drive the first threaded rod (3) and the second threaded rod (4) to synchronously rotate;
the first threaded rod (3) and the second threaded rod (4) rotate, and under a transmission action of threads, can force the first threaded fitting (5) and the second threaded fitting (6) to move in opposite directions.
